# EUROPEAN PATENT SPECIFICATION

(11) **EP 3 064 482 B1**
(45) Date of publication and mention of the grant of the patent: **15.06.2022**
(21) Application number: 16158195.4
(22) Date of filing: 02.03.2016
(51) Int. Cl.: C04B 35/567, C04B 41/45, C04B 41/50, C04B 35/66

(54) **METHOD OF FORMING A SILICON CARBIDE REFRACTORY BLOCK**
HERSTELLUNG EINES FEUERFESTEN BLOCKS AUS SILICIUMCARBID
MÉTHODE POUR FORMER UN BLOC RÉFRACTAIRE DE CARBURE DE SILICIUM

(30) Priority: 04.03.2015 JP 2015042455
(43) Date of publication of application: 07.09.2016
(73) Proprietor: TYK Corporation, Tokyo 108-0075 (JP)
(72) Inventor: YANAGI, Kenji, Gifu 507-8607 (JP)
(74) Representative: TBK

(56) References cited:
- EP-A1- 1 832 565
- CN-A- 101 333 113
- DE-A1- 19 928 173
- JP-A- H07 315 933
- JP-A- H08 188 488
- JP-A- S63 215 566
- JP-A- 2001 328 885
- JP-A- 2010 275 120
- US-B1- 6 506 254

## Description

### BACKGROUND OF THE INVENTION

### Field of the Invention

The present invention relates to a method for forming a silicon carbide-natured refractory block.

### Description of the Related Art

Conventionally, silicon carbide-natured refractory blocks have been heretofore used widely for various industries, especially, as core materials for suchindustries as blast-furnace industries. Since the refractory blocks are molded as predetermined configurations in advance, they have such advantages as being portable as component parts, and being capable of making larger structures by laminating the blocks with each other. The silicon carbide-natured refractory blocks have been improved variously in terms of the durability from such standpoints as the corrosion resistance (or erosion resistance), the spall resistance (or thermal-shock resistance) and the slaking resistance. For example, Japanese Unexamined Patent Publication (KOKAI) Gazette No. 2010-275120 discloses to provide a castable refractory with spall resistance by using pulverized granules, which are made by pulverizing a silicon nitride-bonded SiC refractory with an oxidation-resistant film formed thereon by calcination, as an SiC raw material. JP H07 315933 A discloses a method for forming a silicon carbide refractory body.

### SUMMARY OF THE INVENTION

A refractory block has been sought for, the refractory block provided with much better performance, such as being more usable industrially or exhibiting higher durability, for instance.

The present inventor noticed that heating a silicon carbide-natured refractory block in an oxidizing atmosphere results in a layer in the superficial portion, layer which leads to providing the refractory block with increased corrosion resistance, and thus arrived at inventing the present invention.

The present invention relates to a method as defined in claim 1.

A silicon carbide-natured refractory block formed by the method according to the present invention comprises:
a fire-resistant block body including a silicon carbide-natured refractory having a predetermined configuration; and
a calcination coated layer including silicon oxide made by heating an outer superficial portion of the fire-resistant block body to oxidize at least some of silicon carbide therein to turn the silicon carbide into the silicon oxide.

The present silicon carbide-natured refractory block comprises the fire-resistant block body, and the calcination coated layer. The present silicon carbide-natured refractory block has a predetermined configuration depending on its objects. For example, the present silicon carbide-natured refractory block, which is molded by a mold form, comes to have a predetermined configuration according to the mold form. In addition to this, the present silicon carbide-natured refractory block, which is formed by cutting at predetermined intervals a long-length object having a constant cross section, comes to have a predetermined configuration. The fire-resistant block body includes a silicon carbide-natured refractory. Note herein that the term, "silicon carbide-natured," means including silicon carbide in a broad sense. Since silicon carbide is oxidized to sinter the calcination coated layer, it is difficult to form the calcination coated layer when silicon carbide is included less in the fire-resistant block body before the calcination. Therefore, a silicon carbide-natured refractory of the fire-resistant block body includes silicon carbide as a silicon carbide-natured substance in an amount of 50% by mass or more when all the components of the fire-resistant block body are taken as 100% by mass (hereinafter, "%" signifies "% by mass" unless otherwise specified).

The components of the fire-resistant block body other than silicon carbide, the following can be given: oxides of silicon, aluminum and calcium; and carbides of aluminum and calcium. Moreover, the fire-resistant block body can also include a metal, such as metallic silicon. The components other than silicon carbide, and their blending proportions can be employed separately depending on applications of the present silicon carbide-natured refractory block. Note that the respective components can be granules, or can have a granular shape, respectively. The grain sizes and grain-size distributions can be selected appropriately depending on the applications.

A type of the fire-resistant block body can be selected from any one of the following: a castable block with a predetermined configuration cast by pouring a castable into a mold, and a calcination block made by calcining a molded body with a predetermined configuration. Note herein that the "castable block" is a block which has been also referred to as a pre-cast block, and which is made by turning a granular or granule-shaped refractory into a slurry-like substance with water and then pouring the slurry-like substance into a mold to solidify it to a predetermined configuration. A "press-molded block" is a block in which a powdery, granular or granule-shaped refractory is consolidated by pressing it within a mold. Since the press-molded block is usually put in a more packed state than the castable block, it exhibits lower porosity. The "calcination block" is a sintered block which is made by heating a molded block, namely the castable block.

Since silicon carbide reacts with oxygen to turn into silicon oxide, a silicon carbide-natured refractory is usually sintered in a non-oxidizing atmosphere. Moreover, a calcination additive agent, such as metallic silicon or metallic oxide, has been employed occasionally in order to facilitate the sintering.

The calcination coated layer of the present silicon carbide-natured refractory block is a coated layer that is made by calcining in the presence of oxygen a superficial portion of the fire-resistant block body, which includes the silicon carbide-natured refractory having a predetermined configuration; in which the components of silicon carbide contained in the superficial portion is oxidized to turn into silicon oxide; and in which sintering of the superficial portion has been promoted.

A thickness of the calcination coated layer is 1 mm. When the calcination coated layer is formed on the fire-resistant block body, the lower the original or pre-calcination heat-resistant block body exhibits mechanical strength, the higher the formation of the calcination coated layer effects the advantage of upgrading corrosion resistance. Therefore, it is more effective to form the calcination coated layer on a castable block having high porosity than on a press-molded block having low porosity. However, the advantage of upgrading corrosion resistance arises even when forming the calcination coated layer on the press-molded block. Moreover, it is also effective to further calcine under an oxygen environment a calcination block, which has been made by calcining under a non-oxygen environment a castable block, to form the calcination coated layer.

The silicon carbide-natured refractory block according to the present invention exhibits better affinity to a castable than a silicon carbide-natured refractory block free of the calcination coated layer but having an identical composition when joining the blocks with each other by the castable, and moreover shows increased corrosion resistance. In addition, the present silicon carbide-natured refractory block has high corrosion resistance to blast-furnace slag, and high spall resistance thereto. Consequently, the present silicon carbide-natured refractory block exhibits high durability to serve as a refractory block for blast-furnace molten steels.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.
Fig. 1 is an enlarged cross-sectional diagram for illustrating partially a calcination castable refractory block according to Example of the present invention.
Fig. 2 is a silicon-element analysis diagram for showing a distribution of silicon in a cross-sectional part of the calcination castable refractory block according to Example of the present invention.
Fig. 3 is an oxygen-element analysis diagram for showing a distribution of oxygen in the same cross-sectional part as illustrated in Fig. 2.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

### (Example)

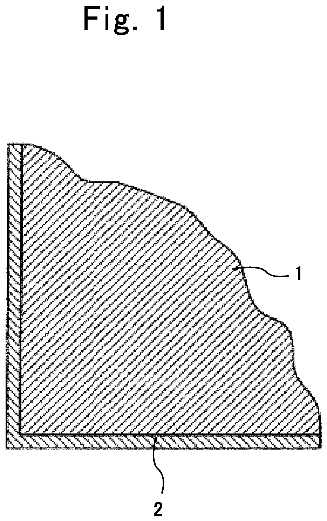

A preferable embodiment of the present invention will be hereinafter described. Fig. 1 illustrates a calcination castable refractory block according to Example of the present invention partially in an enlarged cross-sectional diagram. The calcination castable refractory block has a configuration with a size of 500 mm × 500 mm × 300 mm, and comprises a fire-resistant block body 1, and a calcination coated layer 2. The fire-resistant block body 1 includes a silicon carbide-natured refractory. The calcination coated layer 2 is made by heating an outer superficial portion of the fire-resistant block body 1 within an oxygen atmosphere to oxidize at least some of silicon carbide therein to turn it into silicon oxide.

The present calcination castable refractory block according to Example was obtained by the following method. First of all, a silicon carbide-natured castable, which included Al₂O₃, SiO₂ and SiC in a chemical constituent ratio of 3% by mass, 4% by mass and 86% by mass, respectively, was prepared. The silicon carbide-natured castable was used to mold a castable refractory block having 500 mm × 500 mm × 300 mm in size, and thereafter the silicon carbide-natured castable was dried at 110°C for 24 hours to make the castable refractory block. Then, the castable refractory block was heated at a high temperature of 1,400°C or more in air for a few hours to form the calcination coated layer 2 having a thickness of 1 mm approximately on the surface. Thus, the present calcination castable refractory block according to Example was completed.

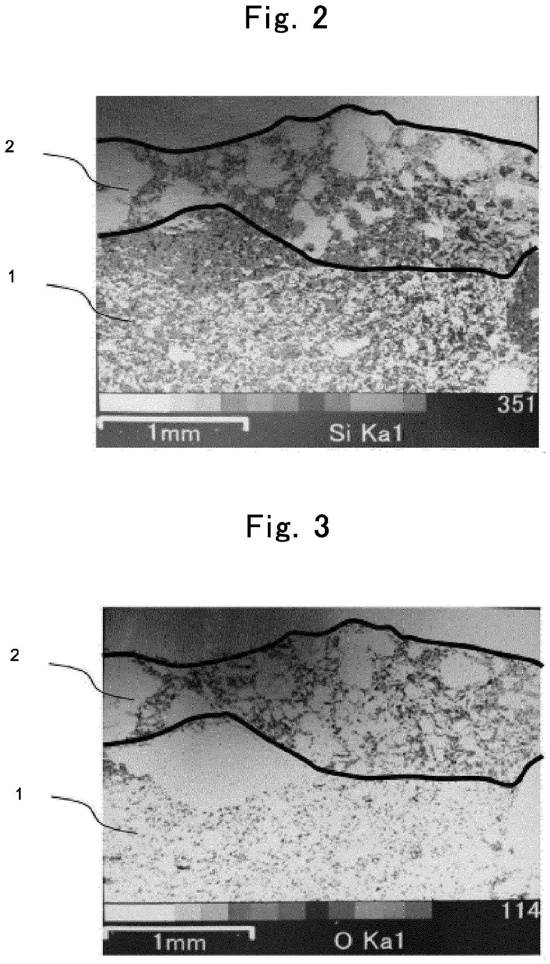

The present calcination castable refractory block according to Example was cut to examine silicon- and oxygen-element distributions in a cross-sectional part of the fire-resistant block body 1 including the calcination coated layer 2. Fig. 2 shows the silicon-element distribution in a diagram, and Fig. 3 shows the oxygen-element distribution in another diagram. Note that, in both of Figs. 2 and 3, a bold black line is drawn on a superficial boundary of the calcination coated layer 2, and another bold black line is drawn on a boundary between the calcination coated layer 2 and the block body 1. Therefore, in Figs. 2 and 3, the calcination coated layer 2 corresponds to a section between the two bold black lines extending in the right and left, and a part of the block body 1 corresponds to a downward section under the lower bold black line. Since a section where oxygen exists becomes black, and since the part of the calcination coated layer 2 is blacker in Fig. 3 than the part of the block body 1, it is understood from Fig. 3 that oxygen was present more in the calcination coated layer 2 than in the block body 1. Moreover, since the black section of the calcination coated layer 2 in Fig. 2 indicates that silicon abounded, it is understood that the black section of the calcination coated layer 2 was silicon oxide. In addition, white sections in Fig, 2 are construed to be voids.

The present calcination castable refractory block according to Example exhibited a porosity of 10.1%, and a bulk specific gravity of 2.63%. Moreover, the present calcination castable refractory block had a compressive strength (i.e., one of the strengths) of 81 MPa, and a bending strength of 39 MPa. The present calcination castable refractory block was subjected to a corrosion test. Using a corrosive agent including blast-furnace slag (whose basicity "C/S" was 1.0) to which mill scale was added in an amount of 10%, the corrosion test was carried out by an induction-furnace dipping method under the following conditions: a testing temperature at from 1, 500 to 1,550°C; and a corrosion time for 6 hours. According to the corrosion test, the present calcination castable refractory block exhibited a corrosion depth of 1.7 mm at the slag-line "SL" section. Moreover, the present calcination castable refractory block was further subjected to a spall resistance test which was carried out by an induction-furnace dipping method under the following conditions: a testing temperature at from 1,450 to 1,550°C; a one-cycle immersion time for 15 minutes; and an air-cooling time for 15 minutes. According to the spall resistance test, the present calcination castable refractory block endured seven rounds by a number of cycles until it fractured to fall down.

For comparison, a castable refractory block on which no calcination coated layer was formed was subjected to the same tests as set forth above. The castable refractory block with no calcination coated layer formed exhibited a porosity of 14.8%, and a bulk specific gravity of 2.42%. Moreover, the castable refractory block with no calcination coated layer had a compressive strength of 12 MPa, and a bending strength of 3 MPa. According to the corrosion test, the castable refractory block free from the calcination coated layer 2 exhibited a corrosion depth of 5.1 mm at the slag-line "SL" section. According to the spall resistance test, the castable refractory block free from the calcination coated layer 2 endured seven rounds by a number of cycles until it fractured to fall down.

As described above, the silicon carbide-natured refractory block formed according to the method of the present invention, especially, the present calcination castable refractory block according to Example had a compressive strength of 81 MPa, and a bending strength of 39 MPa. On the contrary, the ordinary castable refractory block had a compressive strength of 12 MPa, and a bending strength of 3 MPa. Comparing the strengths, the present calcination castable refractory block exhibited the characteristics which were enhanced extremely with respect to those of the ordinary castable refractory block. Moreover, as to the corrosion resistance, the corrosion depth was decreased greatly to 1.7 mm in the present calcination castable refractory block from 5.1 mm in the ordinary castable refractory block. In addition, the present calcination castable refractory block could maintain the spall resistance.

Thus, the silicon carbide-natured refractory block formed according to the method of the present invention comprising a noble layer (i.e., the calcination coated layer) in the superficial portion exhibits increased corrosion resistance to serve as a refractory block.

A silicon carbide-natured refractory block includes a fire-resistant block body, and a calcination coated layer. The fire-resistant block body includes a silicon carbide-natured refractory having a predetermined configuration. The calcination coated layer includes silicon oxide made by heating an outer superficial portion of the fire-resistant block body to oxidize at least some of silicon carbide therein to turn the silicon carbide into the silicon oxide. The silicon oxide sinters the calcination coated layer to increase the corrosion resistance.

## Claims

1. A method for forming a silicon carbide-natured refractory block comprising:
a molding process, including
pouring a silicon carbide-natured refractory castable, which includes Al₂O₃, SiO₂ and SiC in a chemical constituent ratio of 3% by mass, 4% by mass and 86% by mass, respectively, into a mold having a predetermined configuration, and
making a molded block with a predetermined configuration by drying at 110°C for 24 hours; and
an oxidized calcination process making a sintered block by heating the molded block, including
heating an outer superficial portion of the molded block at 1400°C or more in air being an oxygen environment,
thereby oxidizing at least some of the silicon carbide on the outer superficial portion of the molded block,
thereby turning the silicon carbide into silicon oxide, and
thereby forming an oxidized calcination coated layer having a thickness of 1 mm;
wherein the silicon carbide-natured refractory includes silicon carbide in an amount of 50% by mass or more when the entirety is taken as 100% by mass; and
wherein
the silicon carbide-natured refractory block comprises a fire-resistant block body and the calcination coated layer, and
wherein the components of the fire-resistant block body other than silicon carbide include oxides of silicon, oxides of aluminum, oxides of calcium, carbides of aluminum, carbides of calcium and/or a metal.

## Patentansprüche

1. Verfahren zur Herstellung eines feuerfesten Blocks mit Siliciumcarbid-Natur, umfassend:
einen Formvorgang, umfassend
Gießen eines feuerfesten Gießmaterials mit Siliciumcarbid-Natur, das Al₂O₃, SiO₂ und SiC in einem chemischen Bestandteilsverhältnis von 3 Masse-%, 4 Masse-% bzw. 86 Masse-% beinhaltet, in eine Form mit einer vorbestimmten Konfiguration, und
Herstellen eines geformten Blocks mit einer vorbestimmten Konfiguration durch Trocknen bei 110°C für 24 Stunden; und
einen oxidierten Kalzinierungsvorgang zur Herstellung eines gesinterten Blocks durch Erhitzen des geformten Blocks, beinhaltend
Erwärmen eines äußeren Oberflächenteils des Formblocks auf 1400°C oder mehr in Luft, die eine Sauerstoffumgebung ist,
wodurch zumindest ein Teil des Siliciumcarbids auf dem äußeren Oberflächenbereich des geformten Blocks oxidiert wird,
wodurch das Siliciumcarbid in Siliciumoxid umgewandelt wird, und
wodurch eine oxidierte Kalzinierungsüberzugsschicht mit einer Dicke von 1 mm gebildet wird;
wobei das feuerfeste Material mit Siliciumcarbid-Natur Siliciumcarbid in einer Menge von 50 Masse-% oder mehr enthält, wenn die Gesamtheit als 100 Masse-% betrachtet wird; und
wobei
der feuerfeste Block mit Siliciumcarbid-Natur einen feuerfesten Blockkörper und die Kalzinierungsüberzugsschicht umfasst, und wobei die Komponenten des feuerfesten Blockkörpers, die kein Siliciumcarbid sind, Oxide von Silicium, Oxide von Aluminium, Oxide von Calcium, Carbide von Aluminium, Carbide von Calcium und/oder ein Metall beinhalten.

## Revendications

1. Procédé pour former un bloc réfractaire à base de carbure de silicium, comprenant :
un traitement de moulage, comprenant
le versage d'un réfractaire à base de carbure de silicium pouvant être coulé, qui contient de l'Al₂O₃, du SiO₂ et du SiC en des proportions respectives des constituants chimiques de 3 % en masse, 4 % en masse et 86 % en masse, dans un moule ayant une configuration prédéterminée, et
la formation d'un bloc moulé ayant une configuration prédéterminée par séchage à 110°C pendant 24 heures ; et
un traitement de calcination avec oxydation qui donne un bloc fritté par chauffage du bloc moulé, comprenant le chauffage de la partie superficielle extérieure du bloc moulé à 1400°C ou plus dans de l'air qui est un environnement oxygéné,
ce qui oxyde ainsi au moins une partie du carbure de silicium sur la partie superficielle extérieure du bloc moulé,
ce qui transforme ainsi le carbure de silicium en oxyde de silicium, et
ce qui forme ainsi une couche déposée sous forme de revêtement par calcination avec oxydation ayant une épaisseur de 1 mm ;
dans lequel le réfractaire à base de carbure de silicium contient du carbure de silicium en une quantité de 50 % en masse ou plus quand la totalité est considérée être de 100 % en masse ; et
dans lequel le bloc réfractaire à base de carbure de silicium comprend un corps de bloc ignifugé et la couche déposée sous forme de revêtement par calcination, et
dans lequel les composants du bloc ignifugé autres que le carbure de silicium comprennent des oxydes de silicium, des oxydes d'aluminium, des oxydes de calcium, des carbures d'aluminium, des carbures de calcium et/ou un métal.
